# EUROPÄISCHE PATENTSCHRIFT

(11) **EP 1 944 184 B1**
(45) Veröffentlichungstag und Bekanntmachung des Hinweises auf die Patenterteilung: **02.06.2010**
(21) Anmeldenummer: 08000451.8
(22) Anmeldetag: 11.01.2008
(51) Int. Cl.: B60K 3/02, F01K 23/06, F02G 5/04, B60K 6/00

(54) **Hybridantriebseinheit mit einer Verbrennungskraftmaschine und einem Dampfmotor**
Hybrid power unit with a combustion engine and a steam motor
Unité d'entraînement hybride dotée d'un moteur à combustion interne et d'une machine à vapeur

(30) Priorität: 12.01.2007 DE 102007002611
(43) Veröffentlichungstag der Anmeldung: 16.07.2008
(73) Patentinhaber: Voith Patent GmbH, 89522 Heidenheim (DE)
(72) Erfinder: Bausch, Christian, 89437 Bubesheim (DE); Grieser, Jens, 89555 Söhnstetten (DE); Richter, Herbert, 73432 Aalen (DE)
(74) Vertreter: Schmidt, Sven Hendrik

(56) Entgegenhaltungen:
- EP-A- 1 243 758
- WO-A-95/35433
- US-A- 4 351 155
- US-A- 5 191 766

## Beschreibung

Die Erfindung betrifft eine Hybridantriebseinheit mit einer Verbrennungskraftmaschine und einem Dampfmotor, wobei der Dampfmotor über einen geschlossenen Dampfkreis betrieben wird, dem die Abwärme der Verbrennungskraftmaschine zugeführt wird. Die US 4 351 155 zeigt die Merkmale des Oberbegriffes des Anspruches 1.

Verbrennungskraftmaschinen ermöglichen die Umsetzung der ihnen zugeführten Energieträger, wie Diesel, Benzin, Gas oder Pflanzenöle, in mechanische Energie für den Vortrieb nur bis zu einem gewissen Bruchteil, während der größere Energieanteil in Form von Wärme umgesetzt wird. Diese wird entweder über das Kühlwasser oder den Abgasstrom von der Verbrennungskraftmaschine weggeleitet. Um diesen Energiestrom zu nutzen, wurde vorgeschlagen, zusätzlich zur Verbrennungskraftmaschine einen Dampfmotor vorzusehen. Dieser stellt einen Teil eines geschlossenen Dampfkreises dar, dem insbesondere über den Abgasstrom Wärme zugeleitet wird, wobei über diesen Wärmeeintrag in einem Verdampfer ein zunächst flüssiges Arbeitsfluid verdampft wird und mit diesem Dampf ein Expander des Dampfmotors betrieben wird, In diesem wird das dampfförmige Arbeitsfluid unter Verrichtung mechanischer Arbeit entspannt. Nachfolgend zum Expander wird das Arbeitsmedium in einem Kondensator wiederum verflüssigt und in einem Reservoir gesammelt und sodann über eine Pumpeneinrichtung zur erneuten Verdampfung dem Verdampfer zugeführt.

Eine solche Kombination aus Verbrennungskraftmaschine und Dampfmotor geht beispielsweise aus der DE 196 10 382 C2 hervor, in der der Betrieb eines Dampfmotors beschrieben wird, wobei beide Antrieb auf eine gemeinsame Kurbelwelle zugreifen. Alternativ wird in dieser Patentschrift angegeben, dass der Dampfmotor eine zur Verbrennungskraftmaschine getrennte Kurbelwelle aufweist und über ein festes oder variables Getriebe eine mechanische Verbindung zur Kurbelwelle der Verbrennungskraftmaschine hergestellt werden kann. Eine weitere gattungsgemäße Anordnung geht aus der DE 20 58 919 C2 hervor, wobei die Krafteinleitung vom Dampfmotor auf die Welle des Verbrennungsmotors über ein Schaltgetriebe erfolgt.

Eine bauliche Integration von Verbrennungsmotor und Dampfmotor wird in den DE 1 049 155 und DE 1 074 912 beschrieben. Offenbart wird die Ausbildung der Verbrennungskraftmaschine und des Dampfmotors als innenachsige Drehkolbenmaschine, die über baulich verbundene Außenläufer mechanisch gekoppelt sind. Sowohl die Verbrennungskraftmaschine wie auch der Expander des Dampfmotors sind in Wankelbauweise ausgeführt, wodurch sich eine besonders kompakte Antriebseinheit in Hybridkonfiguration realisieren lässt. Nachteilig ist jedoch, dass aufgrund des gemeinsamen Außenläufers keine Trennmöglichkeit zwischen dem Expander und der Verbrennungskraftmaschine besteht, sodass der Expander auch für den Fall, dass für diesen Antrieb keine hinreichende Menge dampfförmigen Arbeitsfluids zur Verfügung steht, dieser in der Energieerzeugungseinheit ständig mitgeschleppt werden muss. Darüber hinaus kann die genannte Anordnung nur durch die bauliche Übereinstimmung zwischen Verbrennungskraftmaschine und Expander realisiert werden.

Wird eine gattungsgemäße Energieerzeugungseinheit zum Antrieb eines Fahrzeugs und insbesondere eines Straßenfahrzeugs verwendet, so besteht eine grundlegende Anforderung darin, den begrenzten Bauraum, der zur Ausbildung der Antriebseinheit im Fahrzeug zur Verfügung steht, so auszunutzen, dass neben der Verbrennungskraftmaschine, welche den Hauptantrieb darstellt, der Dampfmotor und die weiteren zum Betrieb des Dampfkreises verwendeten Komponenten untergebracht werden. In vielen Fällen ist ein solcher Bauraum nicht gegeben, sodass das durch die voranstehend genannten Hybridkonfiguration gegebene Energiesparpotential bisher noch nicht in hinreichender Weise ausgeschöpft wurde.

Der Erfindung liegt daher die Aufgabe zugrunde, einen Dampfmotor in einer Hybridkonfiguration zusammen mit einer Verbrennungskraftmaschine in einer ein Getriebe umfassenden Antriebseinheit so anzuordnen, dass eine möglichst kompakt bauende Antriebseinheit entsteht und zusätzlich der Expander des Dampfmotors für dessen Betrieb vorteilhafte Umgebungsbedingungen aufweist. Die Verbindungsleitungen zu den weiteren Komponenten des Dampfkreises sollen vorteilhaft kurz gewählt werden können und darüber hinaus soll neben einer starren Kupplungsmöglichkeit alternativ eine schaltbare Ankopplung des Dampfmotors an die wenigstens mittelbar von der Verbrennungskraftmaschine angetriebene Antriebswelle möglich sein.

Diese Aufgabe wird durch eine Antriebseinheit mit den Merkmalen von Anspruch 1 gelöst. Vorteilhafte Ausgestaltungen ergeben sich aus den Unteransprüchen.

Ausgehend von einer Antriebseinheit mit einer Verbrennungskraftmaschine und einer Getriebeeinheit, zu der über eine Antriebswelle von der Verbrennungskraftmaschine beim Traktionsbetrieb ein Kraftfluss erfolgt, wird erfindungsgemäß ein Bauraum für einen Dampfmotor durch eine Beabstandung der Verbrennungskraftmaschine vom Getriebe geschaffen. Demnach wird die zunächst vorhandene Flanschverbindung zwischen Verbrennungskraftmaschine und Getriebeeinheit getrennt und die Antriebswelle zwischen Verbrennungskraftmaschine und Getriebe so verlängert, dass die Komponenten des Expanders koaxial um diese Antriebswelle angeordnet werden können .

Gemäß einer vorteilhaften Gestaltung wird der Bauraum für den Expander von einer Gehäuseglocke umschlossen, welche zusätzlich zur Einschlussfunktion für den Expander die Aufgabe übernimmt, die mechanische Verbindung zwischen dem Motorflansch an der Verbrennungskraftmaschine und dem Getriebeflansch herzustellen. An einem weiteren Teil der Gehäuseglocke, vorzugsweise einem radial nach innen verlaufenden Flansch, stützt sich der Expander ab. Demnach wird die den Bauraum des Expanders umschließende Gehäuseglocke zum einen das Flanschanschlussmuster sowohl auf der Seite zur Verbrennungskraftmaschine wie auch zur Getriebeseite aufnehmen, wobei insbesondere Normflansche verwendet werden. Für den Bereich von Lastkraftwagen wird beispielsweise zu diesem Zweck ein SAE1-Flansch vorgesehen sein, dessen Passung auf die Ausgestaltung der Gehäuseglocke für den Expanderbauraum übertragen wird.

Der erfindungsgemäß gewählte Bauraum ist deshalb besonders einfach zu realisieren, da im Wesentlichen lediglich eine Verlängerung der Energieerzeugungseinheit in eine Richtung ausgeführt werden muss. Darüber hinaus kann die bisherige Anordnung der Aggregate für eine Antriebseinheit ohne Dampfmotor übernommen werden. Ein weiterer Vorteil des erfindungsgemäßen Einbaus des Dampfmotors besteht darin, dass der Expander in einem Bereich angeordnet wird, welcher beim Betrieb der Antriebseinheit aufgrund der Abwärme der Verbrennungskraftmaschine sowie der im Getriebe anfallenden Wärme ohnehin eine hohe Umgebungstemperatur aufweist, sodass ein besonders effizienter Betrieb des Expanders möglich ist. Neben diesen beiden, in unmittelbarer axialer Nachbarschaft angeordneten Wärmequellen, kann eine zusätzliche Wärmedämmung zur thermischen Entkopplung des Expanders vom Außenbereich im Bereich des Außenumfangs der Gehäuseglocke vorgesehen sein.

Ferner ist es mit der erfindungsgemäßen Anordnung auf einfache Art und Weise möglich, den Bauraum, in dem der Expander betrieben wird, abzudichten bezüglich des Arbeitsfluids, welches im Expander entspannt wird. Bevorzugt wird hierzu eine Gestaltung der Gehäuseglocke, die im montierten Zustand in Verbindung mit den motor- und getriebeseitig angrenzenden Komponenten eine solche Abdichtung des Bauraums für den Expander realisiert. So kann als eine Seitenwand des abgeschlossenen Expander-Bauraums der radial innerhalb des Getriebeflanschs liegende Teil des Getriebegehäuses verwendet werden und die Gehäuseglocke in diesem Bereich im nicht montierten Zustand ein offenes Ende aufweisen. Die getriebeseitige Abdichtung wird dann mit zugeordneten Dichtungselementen im Bereich des Getriebeflanschs und dem Durchtritt der Antriebswelle zum Getriebe realisiert, Entsprechend kann die Motorseite ausgestaltet sein. Werden jedoch weitere Komponenten, etwa eine Schaltkupplung zur Trennung der Verbrennungskraftmaschine oder eine Torsionsschwingungsdämpfungseinrichtung zwischengeschaltet, so wird bevorzugt die Gehäuseglocke so ausgestaltet, dass diese eine bis zur Antriebwelle reichende Seitenwandung aufweist, die sich radial innerhalb der Flanschverbindung zum Motor erstreckt, und die eine Abdichtung des Expanderbauraums am Durchtritt der Antriebswelle ermöglicht. Die weiteren Komponenten befinden sich dann außerhalb des Bauraums für den Expander und treten damit nicht in Kontakt zum Arbeitsmedium zum Betrieb des Expanders.

Für die radiale Erstreckung des Bauraums des Expanders und damit die Außenabmessungen der Gehäuseglocke wird eine äußere Grenze die Rahmenbreite des Fahrzeugs sein, für einen typischen Lastkraftwagen liegen Rahmenbreiten von 76 bis 87 cm vor. Ferner ist ein hinreichender Bodenabstand für die Gehäuseglocke vorzusehen, um diese keiner starken, zu einer unerwünschten Abkühlung führenden Spritzwasserbelastung auszusetzen. Demnach wird bevorzugt die Gehäuseglocke im Bereich der radialen Erstreckung der durch die Motor- und Getriebeflanschpaarung vorgegebenen Abmessungen realisiert. Hierunter wird verstanden, dass die maximale radiale Ausdehnung der Gehäuseglocke jene der Flanschpaarung um nicht mehr als 50 % und bevorzugt um nicht mehr als 25 % und besonders bevorzugt um nicht mehr als 10 % übersteigt. Zu beachten ist, dass eine in Radialrichtung kompakte Gehäuseglocke zusätzlich zum Bauraumerfordernis aus thermischen Gründen vorteilhaft ist und zusätzlich durch eine im Wesentlichen hülsenförmige Außengestaltung die Aufgabe der Momentabstützung vom Motor- auf den Getriebeflansch auf einfache Art und Weise realisiert werden kann.

Ausgehend vom erfindungsgemäß gewählten Bauraum für den Expander ist es vorteilhaft, einen zweiten Bauraum vorzusehen, welcher axial benachbart zum Bauraum für den Expander angeordnet ist. Bevorzugt wird, diesen zweiten Bauraum ebenfalls radial innerhalb der durch die Gehäuseglocke realisierten Verbindung zwischen dem Motor- und dem Getriebeflansch anzuordnen. In diesem zweiten Bauraum ist es möglich, weitere Komponenten des Dampfkrelses vorzusehen. Dies betrifft insbesondere eine Pumpe zur Zuführung von Arbeitsfluid zum Verdampfer, Aufgrund der unmittelbaren Nähe zum Antriebsstrang ist es möglich, auf einfache Art und Weise einen Antrieb derselben vorzunehmen. Darüber hinaus kann das Reservoir für das Arbeitsfluid, aus dem die Pumpe schöpft, ebenfalls in den koaxial angeordneten zweiten Bauraum untergebracht sein, was wiederum insbesondere im Hinblick auf die Vorwärmung des Arbeitsfluids vor dessen Eintritt in den Verdampfer vorteilhaft ist.

Weiterhin werden bevorzugt im zweiten Bauraum jene Komponenten angeordnet, welche der Kopplung des Expanders zur Antriebswelle dienen. Dies kann zum einen ein Getriebe mit einem variablen oder starren tlbersetzungsverhältnis sein, wobei für diesen Fall der Expander ständig gekoppelt zur Antriebswelle mitläuft. Vorteilhaft ist jedoch auch die Möglichkeit, eine Trennung zwischen der Antriebswelle und dem Expander vornehmen zu können. Hierfür kann im zweiten Bauraum eine Schaltkupplung vorgesehen sein, die es ermöglicht, für den Fall, dass kein hinreichender Zustrom dampfförmigen Arbeitsfluids zum Expander vorliegt, eine Trennung vom Antriebsstrang vorzunehmen, sodass die Verbrennungskraftmaschine den Expander im Leerlauf nicht mitschleppen muss. Mit einer solchen Konfiguration kann der Expander wenigstens mittelbar mit der Antriebswelle verbunden werden, wenn entweder ein hinreichender Wärmeeintrag von der Verbrennungskraftmaschine in den Dampfkreis vorliegt oder aufgrund der gegebenen Fahrsituation von der Antriebseinheit ein besonders hohes Moment angefordert wird, etwa bei einer Fahrt unter Volllast, einer Bergfahrt oder dem Anfahren des Fahrzeugs. Für diesen Fall kann dann der Dampfmotor auf die Antriebswelle über die Schaltkupplung zugeschaltet werden, wobei eventuell dessen Betrieb über einen Dampfspeicher erfolgen kann, welcher während des Expanderstillstands im abgekoppelten Zustand befüllt wird.

Weitere Komponenten, welche im Bereich der Antriebswelle vorgesehen sein können, sind eine Schaltkupplung, die der Verbrennungskraftmaschine zugeordnet ist, Liegt eine Konfiguration vor, bei der sowohl die Verbrennungskraftmaschine wie auch die Expander über separate Schaltkupplungen unabhängig voneinander von der Abtriebswelle getrennt und mit dieser gekoppelt werden können, so ist es möglich, wenigstens kurzzeitig die Traktion ausschließlich Ober den Dampfmotor zu realisieren. Für diesen Fall kann die Verbrennungskraftmaschine gänzlich abgeschaltet werden, d.h. es ist nicht nötig, die minimale Kraftstoffmenge zur Aufrechterhaltung der Leerlaufdrehzahl in die Verbrennungskammern einzuspritzen. Stattdessen wird die abgeschaltete Verbrennungskraftmaschine durch den Dampfmotor im Bedartsfall zum Starten angeschoben. Hierzu wird die der Verbrennungskraftmaschine zugeordnete Kupplung zur Antriebswelle geschlossen, wobei der Dampfmotor gleichzeitig an die Antriebswelle gekoppelt ist und diese treibt. Auf diese Weise kann auf einen separaten Starter verzichtet werden.

Gemäß einer weiteren vorteilhaften Ausgestaltung ist im Antriebsstrang zwischen der Verbrennungskraftmaschine und dem Getriebe eine Torsionsschwingungsdämpfereinrichtung oder ein Zweimassenschwungrad zwischengeschaltet. Dieses kann in Kraftflussrichtung gesehen vor der Einkopplungsstelle für den Dampfmotor vorgesehen sein. Vorteilhaft an einer solchen Gestaltung ist der Umstand, dass die von der Verbrennungskraftmaschine erzeugten Schwingungen nicht auf den Dampfmotor übertragen werden, wodurch dessen Gleichlaufeigenschaften verbessert werden. Alternativ oder zusätzlich kann eine Torsionsschwingungen dämpfende Einheit auch in Kraftflussrichtung nach der Verbrennungskraftmaschine und dem Dampfmotor vorgesehen sein, sodass eine Entkopplung der von der gesamten motorischen Seite der Antriebseinheit stammenden Schwingungen in das Getriebe sicher verhindert wird.

Nachfolgend wird die Erfindung anhand von Figuren genauer beschrieben. In diesen ist im Einzelnen Folgendes dargestellt:
- Fig. 1: zeigt in einer Draufsicht in Richtung der Antriebswelle eine erfindungsgemäße koaxiale Anordnung des Expanders um die Antriebswelle radial innerhalb des Getriebeflanschs.
- Fig. 2: zeigt eine mögliche Ausgestaltung der Anordnung einer Expansionsmaschine gemäß der vorliegenden Erfindung anhand eines Axialschnitts im Zwischenbereich zwischen einer Verbrennungskraftmaschine und einem Getriebe.
- Fig. 3-7: zeigen schematische Ansichten für die Anordnung des Expanders im Zwischenraum zwischen Verbrennungskraftmaschine und Getriebe sowie von zusätzlichen Komponenten zur Ankopplung an die Antriebswelle.

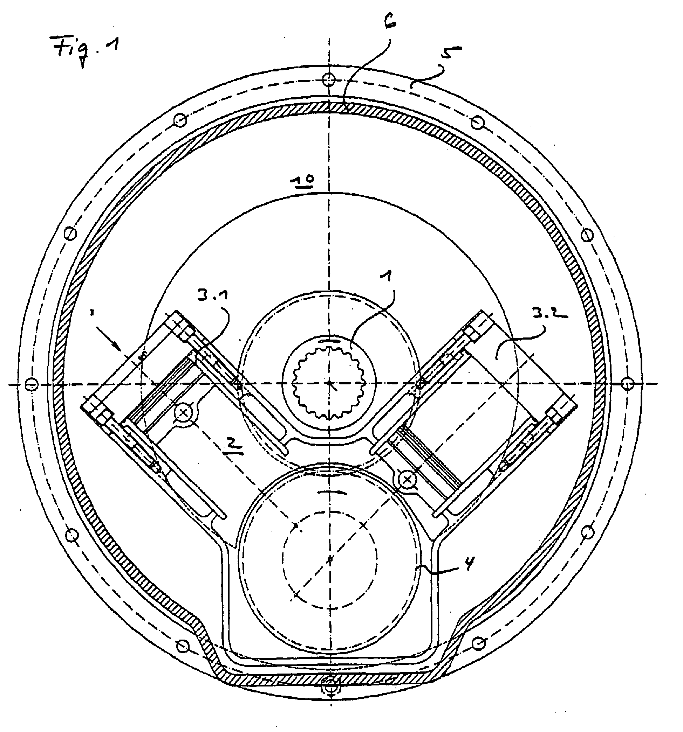

Fig. 1 zeigt die Anordnung eines Expanders 2 mit V-förmig angeordneten Hubkolben 3.1 und 3.2 um die Antriebswelle 1 im Zwischenbereich zwischen einer Verbrennungskraftmaschine und einem Getriebe (diese sind im Einzelnen nicht dargestellt). Der gesamte Expander einschließlich seiner Kurbelwelle 4 wird hierbei so um die Antriebswelle 1 angeordnet und von einer Gehäuseglocke 6 umschlossen, die eine Verbindung zwischen der Motor-/Getriebeftanschpaarung herstellt. Zum Einbau des Expanders ist es demnach notwendig, die Verbrennungskraftmaschine und das Getriebe in Richtung der Antriebsachse voneinander abzurücken und in den so entstehenden Bereichen zwischen Verbrennungskraftmaschine und Getriebe den Expander einzuführen. Die Bauform des Expanders kann hierbei beliebig gewählt sein, so weit das vorgegebene Bauraumerfordernis erfüllt ist.

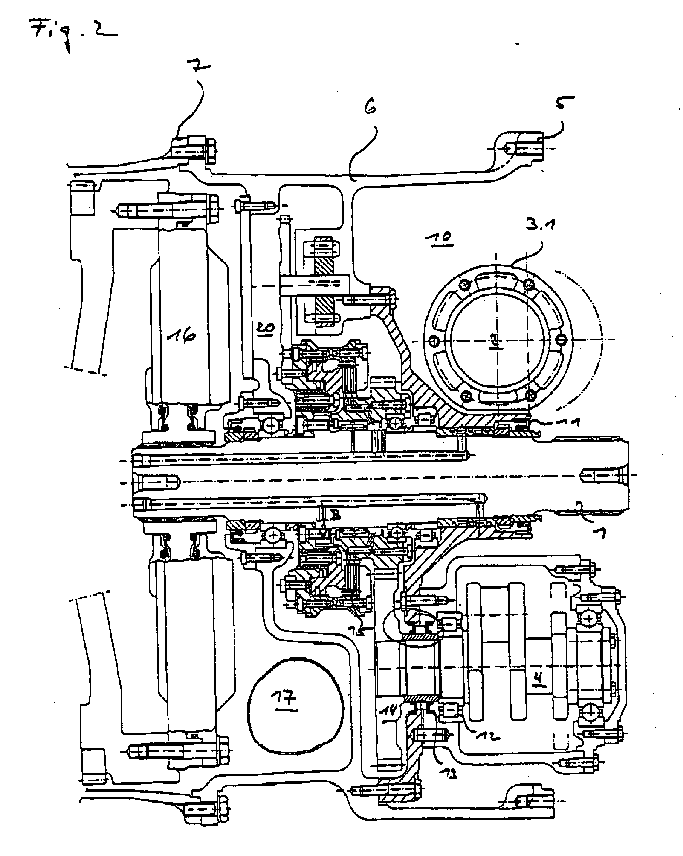

Fig. 2 zeigt in einem Axialschnitt entlang der Antriebswelle 1 eine vorteilhafte Ausgestaltung, für die der Expanderbauraum 10 mit einer solchen Gehäuseglocke 6 umschlossen ist, welche eine drehfeste Verbindung zwischen dem Motorflansch 7 an der Verbrennungskraftmaschine und dem Getriebeflansch 5 herstellt. Hierbei wird vorteilhaft im Sinne eines Zwischenstücks der vorgegebene Standardanschluss zu beiden Seiten realisiert, wobei die Gehäuseglocke 6 zusätzlich zu ihrer Funktion als Abschluss für den Expanderbauraum 10 auch der Abstützung des Getriebes gegenüber den motorischen Einheiten, d.h. der Verbrennungskraftmaschine wie auch des Dampfmotors, dient. Zusätzlich ist der Expanderbauraum 10 aufgrund der beidseitig axial vorhandenen Wärmequellen, d.h. der Verbrennungskraftmaschine zum einen und des Getriebes zum anderen, in einem warmen Bereich der Antriebseinheit angeordnet, welche besonders einfach durch eine am Außenumfang im Bereich der Gehäuseglocke verlaufende Wärmedämmung zusätzlich thermisch von der Umgebung isoliert werden kann. Durch diese Maßnahme ist ein besonders effizienter Betrieb des Expanders 2 möglich.

Gemäß einer vorteilhaften Gestaltung ist der Expanderbauraum 10 abgedichtet bezüglich des Arbeitsfluids mit dem der Expander betrieben wird. Hierzu ist in Fig. 2 schematisch eine Wellendichtung 11 dargestellt sowie eine weitere Dichtung 13 für den Durchtritt der Kurbelwelle. In diesem Bereich ist ein zusätzliches Wellenlager 12 vorgesehen, welches korrosionsbeständig gegenüber dem für den Betrieb des Dampfkreises verwendeten Arbeitsfluid ist.

Besonders bevorzugt schließt sich axial benachbart zum Expanderbauraum 10 ein zweiter Bauraum 20 an, in dem die Ankopplungskomponenten zur mechanischen Kopplung des Expanders an die Antriebswelle 1 vorgesehen sind. In Fig. 2 ist hierzu eine starre Getriebestufe 14 und eine Lamellenkupplung 15 gezeigt.

Demnach ist es möglich, den Expander je nach Bedarf von der Antriebswelle 1 abzukoppeln bzw, diesen zuzuschalten. Anstatt der starren Getriebeübersetzung kann auch eine variable Getriebeübersetzung, beispielsweise durch ein Planetengetriebe, realisiert werden. Im Bereich dieses zweiten Bauraums, welcher auch als zweiteiliger Bauraum zu beiden Seiten des Expanderbauraums 10 realisiert werden kann, wird vorteilhafterweise die Speisepumpe 17 für das Arbeitsfluid zum Betrieb des Dampfkreises angeordnet. Der Vorteil dieser Anordnung ist darin zu sehen, dass die Speisepumpe 17, die der Entnahme von Arbeitsfluid aus einem Reservoir und der Zuführung zu einem Verdampfer dient, einfach durch eine Ankopplung an den Antriebsstrang angetrieben werden kann. Darüber hinaus ist es gemäß einer weiteren Ausgestaltung möglich, das Reservoir für das Arbeitsfluid in dem erwärmten Zwischenbereich zwischen Verbrennungskraftmaschine und Getriebe unterzubringen, wobei sich wiederum hierzu der zweite Bauraum 20 anbietet.

Die Verbindung der Verbrennungskraftmaschine zur Antriebswelle 1 kann gemäß der in Fig. 2 gezeigten Ausgestaltung Ober einen Torsionsschwingungsdämpfer 16 bzw. über ein Zweimassenschwungrad erfolgen. Alternativ oder zusätzlich kann hierfür eine Schaltkupplung vorgesehen sein, die der Entkopplung der Verbrennungskraftmaschine von der Antriebswelle 1 dient.

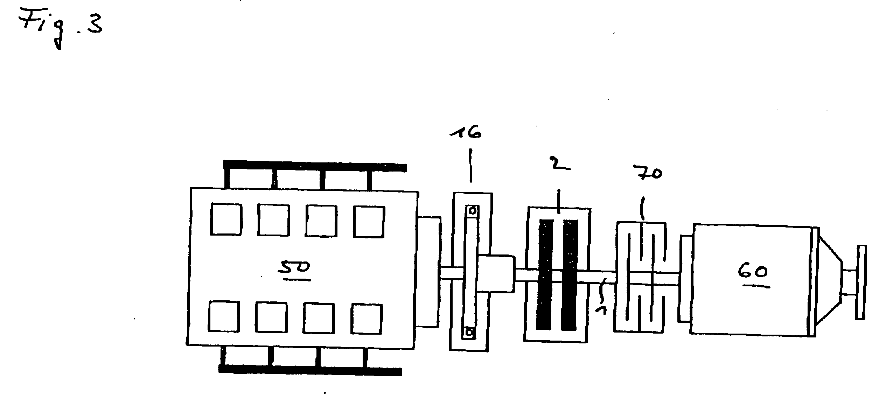

Im Folgenden werden unterschiedliche Konfigurationen des Antriebsstrangs für die Antriebseinheit mit Hybridmotor und einen erfindungsgemäß eingebauten Expander dargelegt. Die Figuren 3 - 7 stellen lediglich Prinzipiendarstellungen dar, wobei im Einzelnen die Größenverhältnisse der Komponenten im Antriebsstrang nicht maßstäblich wiedergegeben werden und insbesondere der Expander 2 bezüglich seiner radialen Erstreckung vergrößert dargestellt ist.

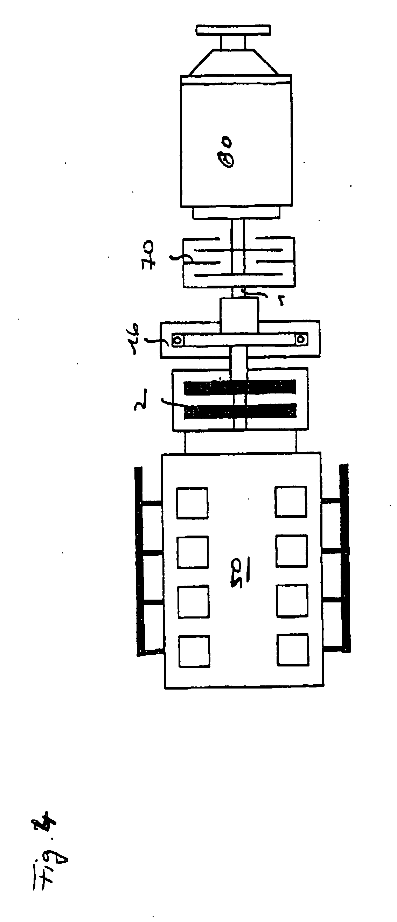

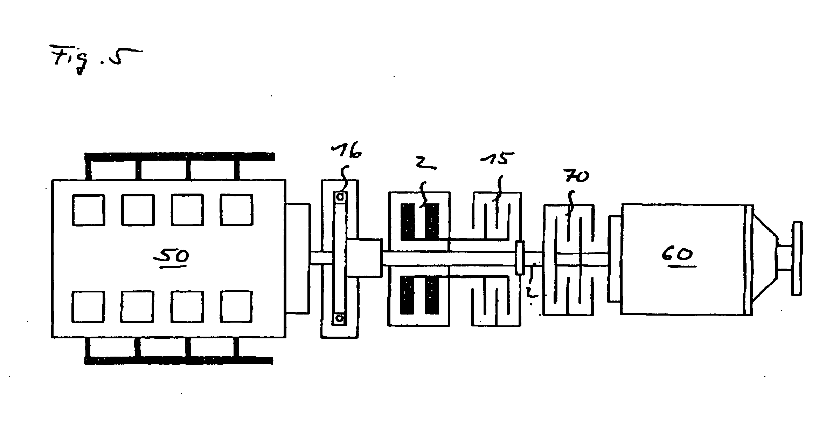

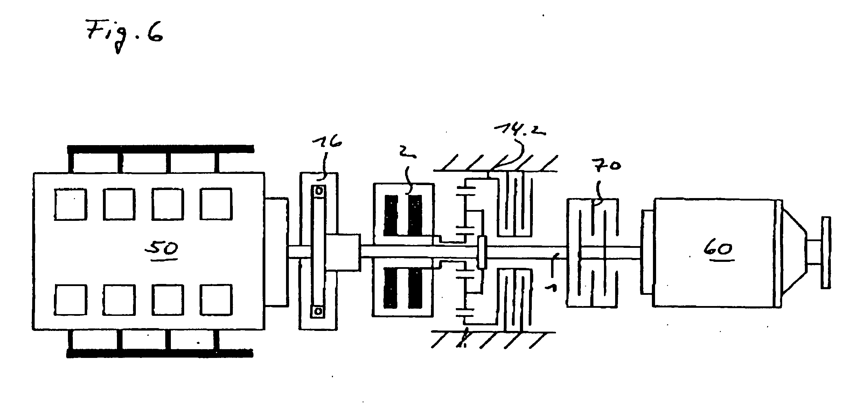

Schematisch vereinfacht wird eine Antriebswelle 1 gezeigt, welche wenigstens mittelbar von einer Verbrennungskraftmaschine 50 angetrieben wird und die den Kraftfluss zu einem Getriebe 60 weiterleitet. Besonders bevorzugt wird eine Torsionsschwingungsdämpfungseinheit 16 bzw. ein Zweimassenschwungrad zur Entkopplung der Schwingungen der Verbrennungskraftmaschine zwischengeschaltet, wobei gemäß Fig. 3 der Expander 2 in Kraftflussrichtung diesem Torsionsschwingungsdämpfer 16 nachfolgt. Gemäß einer alternativen Ausgestaltung ist der Torsionsschwingungsdämpfer 16 in Kraftflussrichtung nach dem Expander 2 angeordnet. Weiterhin besteht mit dem Kupplungselement 70 im Antriebsstrang die Möglichkeit, eine Trennung des Hybridmotors, umfassend die Verbrennungskraftmaschine 50 und den Expander 2 des Dampfmotors, vom Getriebe 60 vorzunehmen. Für den Expander besteht wiederum die Möglichkeit einer starren Ankopplung an die Antriebswelle, was in Fig. 3 und 4 dargestellt wird. Alternativ kann die Krafteinleitung über eine separate, dem Expander 2 zugeordnete Schaltkupplung 15 vorgenommen werden, was eine Trennung des Expanders 2 für den Fall, dass dieser im Leerlauf betrieben wird, von der Antriebswelle 1 ermöglicht, dies ist in Fig. 5 dargestellt. Eine Ausgestaltungsalternative ergibt sich aus Fig. 6, die schematisch vereinfacht eine schaltbare Ankopplungsmöglichkeit für den Expander 2 an der Antriebswelle in Form eines übersetzungsvariablen Getriebes 14.2 mit zugeordneten Reibschlusselementen darstellt. Ein solches kann beispielsweise über einen Planetenradsatz realisiert werden.

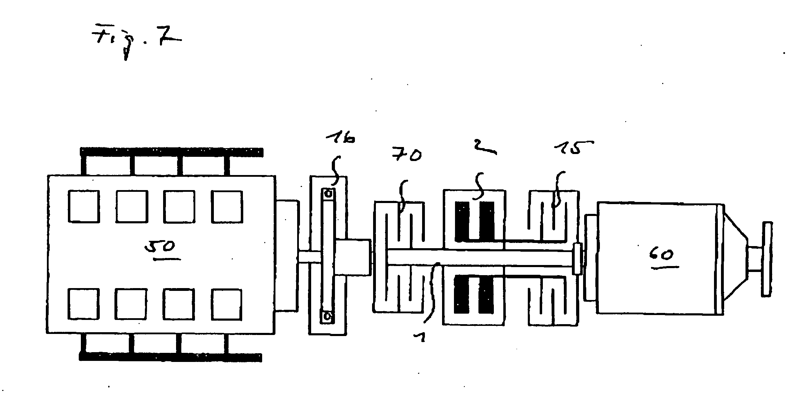

Eine weitere besonders bevorzugte Ausgestaltung ist in Fig. 7 dargestellt. Hierbei ist die Schaltkupplung 70 in Kraftflussrichtung so der Schaltkupplung 15 zur Ankopplung des Expanders 2 an den Antriebsstrang 1 vorgeschaltet, dass sowohl die Verbrennungskraftmaschine 50 wie auch der Expander 2 jeweils unabhängig voneinander schaltbar mit dem Antriebsstrang 1 verbindbar sind. Durch eine solche Konfiguration kann der Solobetrieb sowohl mit der Verbrennungskraftmaschine 50 wie auch mit dem Expander 2 realisiert werden. Steht demnach eine hinreichende Menge dampfförmigen Arbeitsfluids zum Betrieb des Expanders 2 zur Verfügung, so kann die Verbrennungskraftmaschine 50 zumindest zeitweise gänzlich stillgelegt werden. Dies ist insbesondere vorteilhaft für ein energieeffizientes und geräuscharmes Anfahren, wobei hierfür das unmittelbar auch bei geringen Drehzahlen zur Verfügung stehende, hohe Antriebsmoment des Dampfmotors vorteilhaft Verwendung findet.

### Bezugszeichenliste

- 1: Antriebswelle
- 2: Expander
- 3.1, 3.2: Hubkolben
- 4: Kurbelwelle
- 5: Getriebeflansch
- 6: Gehäuseglocke
- 7: Motorflansch
- 10: Expanderbauraum
- 11: Wellendichtung
- 12: Wellenlager
- 13: weitere Dichtung
- 14: starre Getriebestufe
- 14.2: übersetzungsvariables Getriebe
- 15: Lamellenkupplung
- 16: Torsionsschwingungsdämpfer
- 17: Speisepumpe
- 20: zweiter Bauraum
- 50: Verbrennungskraftmaschine
- 60: Getriebe
- 70: Kupplungselement

## Patentansprüche

1. Antriebseinheit, umfassend
1.1 einen Hybridmotor mit einer Verbrennungskraftmaschine (50) und einem Dampfmotor, der über einen geschlossenen Dampfkreislauf, dem Abwärme der Verbrennungskraftmaschine (50) zugeführt wird, angetrieben wird und der wenigstens einen Expander (2) umfasst;
1.2 ein vom Hybridmotor Ober eine Antriebswelle (1) wenigstens mittelbar angetriebenes Getriebe (60); wobei der Expander (2) in einem Bauraum (10) angeordnet ist, welcher zwischen der Verbrennungskraftmaschine (50) und dem Getriebe (60), koaxial zur Antriebswelle (1) liegt;
**dadurch gekennzeichnet, dass**
1.3 der Bauraum (10) für den Expander (2) radial außen durch eine Gehäuseglocke (6) abgeschlossen wird, welche eine Verbindung zwischen einem Motorflansch (7) an der Verbrennungskraftmaschine (50) und einem Getriebeflansch (6) am Getriebe (60) herstellt: und
1.3 der Gehäuseglocke (6) eine Wärmedämmung zur thermischen Entkopplung des Expanders (2) vom Außenbereich zugeordnet ist.

2. Antriebseinheit nach Anspruch 1, **dadurch gekennzeichnet, dass** die Gehäuseglocke (6) so ausgebildet ist, dass eine Abstützung des Getriebes (60) gegen das von der Antriebswelle (1) eingeleitete Moment erfolgt

3. Antriebseinheit nach wenigstens einem der Ansprüche 1 oder 2, **dadurch gekennzeichnet, dass** die Anschlüsse der Gehäuseglocke (6) zum Getriebeflansch (5) entsprechend zum Motorflansch (7) ausgebildet sind.

4. Antriebseinheit nach wenigstens einem der Ansprüche 1 bis 3, **dadurch gekennzeichnet, dass** die Gehäuseglocke (6) einen radial nach innen gerichteten Flansch umfasst, der zur Befestigung des Expanders (2) dient.

5. Antriebseinheit nach wenigstens einem der Ansprüche 1 bis 4, **dadurch gekennzeichnet, dass** der Bauraum (10) für den Expander (2) bezügilch des Arbeitsfluids zum Betrieb des Expanders (2) dicht ausgebildet ist.

6. Antriebseinheit nach Anspruch 5, **dadurch gekennzeichnet, dass** eine Dichtung zwischen dem Bauraum (10) für den Expander (2) und der Antriebswelle (1) zur Abdichtung gegen einen Durchtritt des Arbeitsfluids zum Betrieb des Expanders (2) vorgesehen ist.

7. Antriebseinheit nach wenigstens einem der Ansprüche 1 bis 6, **dadurch gekennzeichnet, dass** der Expander (2) starr oder über ein Getriebe (60) mit der Antriebswelle (1) gekoppelt ist.

8. Antriebseinheit nach wenigstens einem der Ansprüche 1 bis 6, **dadurch gekennzeichnet, dass** der Expander (2) mittels einer Schaltkupplung mit der Antriebswelle (1) koppelbar ist.

9. Energieerzeugungseinheit nach wenigstens einem der Ansprüche 1 bis 8, **dadurch gekennzeichnet, dass** axial benachbart zum Bauraum (10) für den Expander ein zweiter Bauraum (20) für ein Getriebe und/oder eine Schaltkupplung zur Kopplung des Expanders (2) mit der Antriebswelle (1) vorgesehen ist und dieser zweite Bauraum (20) gegenüber dem Bauraum (10) für den Expander (2) bezüglich des Arbeitsfluids des Expanders (2) abgedichtet ist, wobei der zweite Bauraum (20) von der den Bauraum (10) des Expanders (2) umschließenden Gehäuseglocke (6) ebenfalls umschlossen wird.

10. Antriebseinheit nach wenigstens einem der vorausgehenden Ansprüche, **dadurch gekennzeichnet, dass** zwischen dem Hybridmotor und dem Getriebe (60) ein Schwingungsdämpfer (16) und/oder eine Schaltkupplung vorgesehen sind.

11. Energieerzeugungseinheit nach einem der vorhergehenden Ansprüche, **dadurch gekennzeichnet, dass** der Verbrennungskraftmaschine (50) und dem Dampfmotor jeweils separate Kupplungsvorrichtungen zugeordnet sind, mit denen eine Ankopplung und Trennung von der Antriebswelle (1) vollzogen werden kann.

12. Antriebseinheit nach einem der vorhergehenden Ansprüche, **dadurch gekennzeichnet, dass** in Kraftflussrichtung zwischen der Verbrennungskraftmaschine (50) und dem Dampfmotor ein Torsionsschwingungsdämpfer (16) oder ein Zweimassenschwungrad vorgesehen sind.

13. Antriebseinheit nach wenigstens einem der vorausgehenden Ansprüche, **dadurch gekennzeichnet, dass** als Expander (2) eine Hubkolbenmaschine verwendet wird, deren Hubkolben (3.1, 3.2) und die durch die Hubkolben (3.1, 3.2) angetriebene Kurbelwelle (4) koaxial um die Antriebswelle (1) angeordnet sind.

14. Antriebseinheit nach wenigstens einem der Ansprüche 1 bis 13, **dadurch gekennzeichnet, dass** als Expander (2) eine Kreiskolbenmaschine verwendet wird.

15. Antriebseinheit nach Anspruch 14, **dadurch gekennzeichnet, dass** der Expander (2) kaskadiert ausgebildet ist und mehrere axial zueinander beabstandete Kreiskolben umfasst.

## Claims

1. A drive unit, comprising
1.1 a hybrid engine with a combustion engine (50) and a steam engine which is driven by a closed steam circuit to which exhaust heat of the combustion engine (50) is supplied and comprises at least one expander (2);
1.2 a transmission (60) driven at least indirectly by the hybrid engine via a drive shaft (1), with the expander (2) being arranged in a space (10) which is disposed coaxially to the drive shaft (1) between the combustion engine (50) and the transmission (60);
**characterized in that**
1.3 the space (10) for the expander (2) is sealed radially to the outside by a bell-shaped housing (6) which produces a connection between an engine flange (7) on the combustion engine (50) and a transmission flange (5) on the transmission (60), and
1.4 the bell-shaped housing (6) is associated with a thermal insulation for thermally decoupling the expander (2) from the outside area.

2. A drive unit according to claim 1, **characterized in that** the bell-shaped housing (6) is arranged in such a way that a support of the transmission (60) occurs against the moment introduced by the drive shaft (1).

3. A drive unit according to at least one of the claims 1 or 2, **characterized in that** the connections of the bell-shaped housing (6) to the transmission flange (5) are arranged according to the engine flange (7).

4. A drive unit according to at least one of the claims 1 to 3, **characterized in that** the bell-shaped housing (6) comprises a radially inwardly facing flange which is used for fastening the expander (2).

5. A drive unit according to at least one of the claims 1 to 4, **characterized in that** the space (10) for the expander (2) is arranged in a tight manner with respect to the working fluid for the operation of the expander (2).

6. A drive unit according to claim 5, **characterized in that** a seal is provided between the space (10) for the expander (2) and the drive shaft (1) for sealing against any passage of the working fluid for operation of the expander (2).

7. A drive unit according to at least one of the claims 1 to 6, **characterized in that** the expander (2) is coupled with the drive shaft (1) either rigidly or via a transmission (60).

8. A drive unit according to at least one of the claims 1 to 6, **characterized in that** the expander (2) can be coupled by means of a shifting clutch with the drive shaft (1).

9. A power generation unit according to at least one of the claims 1 to 8, **characterized in that** a second space (20) for a transmission and/or a shifting clutch for coupling the expander (2) with the drive shaft (1) is provided axially adjacent to the space (10) for the expander and said second space (20) is sealed with respect to the working fluid of the expander (2) in relation to the space (10) for the expender (2), with the second space (20) being also enclosed by the bell-shaped housing (6) enclosing the space (10) of the expander (2).

10. A drive unit according to at least one of the preceding claims, **characterized in that** a vibration damper (16) and/or a shifting clutch are provided between the hybrid engine and the transmission (60).

11. A power generation unit according to one of the preceding claims, **characterized in that** the combustion engine (50) and the steam engine are each associated with separate coupling apparatuses, with which a coupling with and a separation from the drive shaft (1) can be performed.

12. A drive unit according to one of the preceding claims, **characterized in that** a torsional vibration damper (16) or a dual-mass flywheel is provided in the direction of power flow between the combustion engine (50) and the steam engine.

13. A drive unit according to at least one of the preceding claims, **characterized in that** a reciprocating piston machine is used as an expander (2) whose reciprocating pistons (3.1, 3.2) and the crankshaft (4) driven by the reciprocating pistons (3.1, 3.2) are arranged coaxially about the drive shaft (1).

14. A drive unit according to one of the claims 1 to 13, **characterized in that** a rotary piston machine is used as an expander (2).

15. A drive unit according to claim 14, **characterized in that** the expander (2) is arranged in a cascaded manner and comprises several rotary pistons which are spaced from one another axially.

## Revendications

1. Unités motrice comprenant
1.1 un moteur hybride avec un moteur à explosion (50) et un moteur à vapeur qui est entraîné par un circuit de vapeur fermé auquel est amenée la chaleur extraite du moteur à explosion (50) et qui comprend au moins un expanseur (2) ;
1.2 une transmission (60) entraînée au moins indirectement par un arbre d'entraînement (1), l'expanseur (2) étant disposé dans un volume (10) qui se trouve entre le moteur à explosion (50) et la transmission (60) et qui est coaxial de l'arbre d'entraînement (1) ;
**caractérisé en ce que**
1.3 le volume (10) destiné à l'expanseur (2) est fermé dans le sens radial vers l'extérieur par une cloche (6) qui crée une liaison entre une bride de moteur (7) sur le moteur à explosion (50) et une bride de transmission (5) sur la transmission (60) ; et
1.4 la cloche (6) est associée à une isolation thermique pour le découplage thermique de l'expanseur (2) vis-à-vis de l'extérieur.

2. Unité motrice selon la revendication 1, **caractérisée en ce que** la cloche (6) est conformée de telle façon que la transmission (60) est soutenue contre le couple transmis par l'arbre d'entraînement (1).

3. Unité motrice selon l'une au moins des revendications 1 ou 2, **caractérisée en ce que** les raccords de la cloche (6) avec la bride de transmission (5) sont réalisés de la même manière que la bride de moteur (7).

4. Unité motrice selon l'une au moins des revendications 1 à 3, **caractérisée en ce que** la cloche (6) comprend une bride dirigée vers l'intérieur dans le sens radial, qui sert à la fixation de l'expanseur (2).

5. Unité motrice selon l'une au moins des revendications 1 à 4, **caractérisée en ce que** le volume (10) pour l'expanseur (2) est étanche par rapport au fluide de travail pour le fonctionnement de l'expanseur (2).

6. Unité motrice selon la revendication 5, **caractérisée en ce qu'**un joint est prévu entre le volume (10) pour l'expanseur (2) et l'arbre d'entraînement (1) afin d'empêcher le passage du fluide de travail pour le fonctionnement de l'expanseur (2).

7. Unité motrice selon l'une au moins des revendications 1 à 6, **caractérisée en ce que** l'expanseur (2) est couplé à l'arbre d'entraînement (1) de façon rigide ou par l'intermédiaire d'une transmission (60).

8. Unité motrice selon l'une des revendications 1 à 6, **caractérisée en ce que** l'expanseur (2) peut être couplé à l'arbre d'entraînement (1) au moyen d'un embrayage.

9. Unité de génération d'énergie selon l'une au moins des revendications 1 à 8, **caractérisée en ce qu'**il est prévu à proximité du volume (10) pour l'expanseur dans le sens axial un deuxième volume (20) pour une transmission et/ou un embrayage pour le couplage de l'expanseur (2) avec l'arbre d'entraînement (1) et ce deuxième volume (20) est étanche vis-à-vis du volume (10) pour l'expanseur (2) en ce qui concerne le fluide de travail de l'expanseur (2), le deuxième volume (20) étant également entouré par la cloche (6) qui entoure le volume (10) de l'expanseur (2).

10. Unité motrice selon l'une des revendications précédentes, **caractérisée en ce qu'**il est prévu entre le moteur hybride et la transmission (60) un amortisseur de vibrations (16) et/ou un embrayage.

11. Unité de génération d'énergie selon l'une des revendications précédentes, **caractérisée en ce que** le moteur à explosion (50) et le moteur à vapeur sont associés à des dispositifs d'accouplement séparés pouvant réaliser le couplage et le découplage avec l'arbre d'entraînement (1).

12. Unité motrice selon l'une des revendications précédentes, **caractérisée en ce qu'**un amortisseur de vibrations en torsion (16) ou un volant d'inertie à deux masses est prévu dans le sens du flux de force entre le moteur à explosion (50) et le moteur à vapeur.

13. Unité motrice selon l'une des revendications précédentes, **caractérisée en ce qu'**une machine à piston alternatif est utilisée comme expanseur (2), dont le piston alternatif (3.1, 3.2) et la manivelle (4) entraînée par le piston alternatif (3.1, 3.2) sont disposés de façon coaxiale autour de l'arbre d'entraînement (1).

14. Unité motrice selon l'une au moins des revendications 1 à 13, **caractérisée en ce qu'**une machine à piston rotatif est utilisée comme expanseur (2).

15. Unité motrice selon la revendication 14, **caractérisée en ce que** l'expanseur (2) est construit en cascade et comprend plusieurs pistons rotatifs disposés à distance les uns des autres dans le sens axial.
